# EUROPEAN PATENT APPLICATION

(11) **EP 4 083 872 A1**
(43) Date of publication of application: **02.11.2022**
(21) Application number: 19957132.4
(22) Date of filing: 25.12.2019
(51) Int. Cl.: G06N 20/00

(54) **INTENTION FEATURE VALUE EXTRACTION DEVICE, LEARNING DEVICE, METHOD, AND PROGRAM**

(71) Applicant: NEC Corporation, 108-8001 Tokyo (JP)
(72) Inventor: ETO, Riki, Tokyo 108-8001 (JP)
(74) Representative: Betten & Resch
(86) International application number: PCT/JP2019/050882
(87) International publication number: WO 2021/130916

(57) **Abstract**

The intention feature extraction device 80 includes an input unit 81, a learning unit 82, and a feature extraction unit 83. The input unit 81 receives input of a decision-making history of a subject. The learning unit 82 learns an objective function in which factors of an intended behavior of the subject are explanatory variables, based on the decision-making history. The feature extraction unit 83 extracts weights of the explanatory variables of the learned objective function as features which represent intention of the subject.

## Description

### Technical Field

The present invention relates to an intention feature extraction device, an intention feature extraction method, an intention feature extraction program for extracting an intention feature (feature), and a model learning system, a learning device, a learning method, and a learning program for learning using the extracted feature.

### Background Art

In recent years, the technology to automatically formulate and mechanize optimal decision making in various tasks has become more important. In general, in order to make optimal decisions, the optimization target is formulated as a mathematical optimization problem, and the optimal behavior is determined by solving the problem. In this case, the formulation of the mathematical optimization problem is the key, but it is difficult to formulate it manually. Therefore, attempts are being made to further develop the technology by simplifying this formulation.

Inverse reinforcement learning is known as one of the methods to formulate mathematical optimization problems. Inverse reinforcement learning is a method of learning an objective function (reward function) that evaluates the behavior of each state based on the history of decision making of an expert. In inverse reinforcement learning, the objective function of an expert is estimated by updating the objective function so that the history of decision making is closer to that of the expert.

The intentions assumed by experts are complex and vary depending on the situation. Therefore, when multiple intentions are simply modeled, the objective function also becomes complex, and it is difficult to determine the intentions of the expert from the estimated objective function. Therefore, there is a need for a method to learn complex intentions as an objective function expressed in a form that can be interpreted by humans as a combination of multiple simple intentions.

With respect to the method of learning as an objective function expressed in an interpretable form, the non-patent literature 1 describes a piecewise sparse linear regression model that can select a predictive model for each case. The piecewise sparse linear regression model described in the non-patent literature 1 is a kind of Hierarchical Mixtures of Experts model (HME). The model is represented by a tree structure in which components (objective function, prediction model) are assigned to leaf nodes and nodes called gate functions are assigned to other nodes.

### Citation List

### Non patent Literature

NPL 1: Riki Eto, Ryohei Fujimakiy, Satoshi Morinaga, Hiroshi Tamano, "Fully-Automatic Bayesian Piecewise Sparse Linear Models", AISTATS, pp.238-246, 2014.

### Summary of Invention

### Technical Problem

Decision-making histories acquired under various circumstances can be said to be data including various intentions of experts. For example, the driving data of drivers include driving data of drivers with different characteristics and driving data in different driving situations. However, the decision-making history is not data that represents the intentions of the expert itself, but data that represents the results of behaviors taken based on the intentions of the expert. Therefore, it is difficult to grasp the intentions of an expert by referring to the decision-making history itself.

It is possible to learn a predictive model with high interpretability using the method described in the non-patent literature 1. However, although it is possible to determine the factors that affect the prediction results from the prediction model learned by the method described in the non-patent literature, it is difficult to interpret intention of the subject itself.

On the other hand, it is possible to imitate the behavior of an expert by using the objective function obtained by inverse reinforcement learning. However, even if the behavior itself reflects the intention of the expert, it is difficult to objectively determine the intention of the expert by referring to the behavior itself. Therefore, it is preferable to be able to ascertain intention of the subject's the subject in an interpretable manner.

Therefore, it is an exemplary object of the present invention to provide an intention feature extraction device, an intention feature extraction method, an intention feature extraction program that can extract intention of the subject as an interpretable feature, and a model learning system, a learning device, a learning method, and a learning program for learning using the feature.

### Solution to Problem

An intention feature extraction device according to an exemplary aspect of the present invention includes an input unit which receives input of a decision-making history of a subject, a learning unit which learns an objective function in which factors of an intended behavior of the subject are explanatory variables, based on the decision-making history, and a feature extraction unit which extracts weights of the explanatory variables of the learned objective function as features which represent intention of the subject.

A learning device according to an exemplary aspect of the present invention includes an input unit which inputs as training data features extracted based on an objective function, that is learned based on a decision-making history of a subject, in which factors of an intended behavior of the subject are explanatory variables, a model learning unit which learns a prediction model by machine learning using the input training data, and an output unit which outputs the learned prediction model.

A model learning system according to an exemplary aspect of the present invention includes a learning unit which learns an objective function in which factors of an intended behavior of a subject are explanatory variables, based on a decision-making history, a feature extraction unit which extracts weights of the explanatory variables of the learned objective function as features which represent intention of the subject, a model learning unit which learns a prediction model by machine learning using the extracted features as training data, and an output unit which outputs the learned prediction model.

An intention feature extraction method according to an exemplary aspect of the present invention includes receiving input of a decision-making history of a subject, learning an objective function in which factors of an intended behavior of the subject are explanatory variables, based on the decision-making history, and extracting weights of the explanatory variables of the learned objective function as features which represent intention of the subject.

A learning method according to an exemplary aspect of the present invention includes inputting as training data features extracted based on an objective function, that is learned based on a decision-making history of a subject, in which factors of an intended behavior of the subject are explanatory variables, learning a prediction model by machine learning using the input training data, and outputting the learned prediction model.

An intention feature extraction program according to an exemplary aspect of the present invention causes a computer to execute an inputting process of receiving input of a decision-making history of a subject, a learning process of learning an objective function in which factors of an intended behavior of the subject are explanatory variables, based on the decision-making history, and a feature extracting process of extracting weights of the explanatory variables of the learned objective function as features which represent intention of the subject.

A learning program according to an exemplary aspect of the present invention causes a computer to execute an inputting process of inputting as training data features extracted based on an objective function, that is learned based on a decision-making history of a subject, in which factors of an intended behavior of the subject are explanatory variables, a model learning process of learning a prediction model by machine learning using the input training data, and an outputting process of outputting the learned prediction model.

### Advantageous Effects of Invention

According to the present invention, the intention of the subject can be extracted as an interpretable feature.

### Brief Description of Drawings

[FIG. 1] It depicts a block diagram showing a configuration example of an exemplary embodiment of an intention feature extraction device according to the present invention.
[FIG. 2] It depicts an explanatory diagram explaining an overview of the hierarchical mixtures of experts.
[FIG. 3] It depicts an explanatory diagram showing an objective function.
[FIG. 4] It depicts an explanatory diagram showing an operation example of the intention feature extraction device.
[FIG. 5] It depicts an explanatory diagram showing an operation example of the learning device.
[FIG. 6] It depicts a block diagram showing a summarized intention feature extraction device according to the present invention.
[FIG. 7] It depicts a block diagram showing a summarized learning device according to the present invention.
[FIG. 8] It depicts a block diagram showing a summarized model learning system according to the present invention.
[FIG. 9] It depicts a summarized block diagram showing a configuration of a computer for at least one exemplary embodiment.

### Description of Embodiments

Hereinafter, exemplary embodiments of the present invention will be described with reference to the drawings.

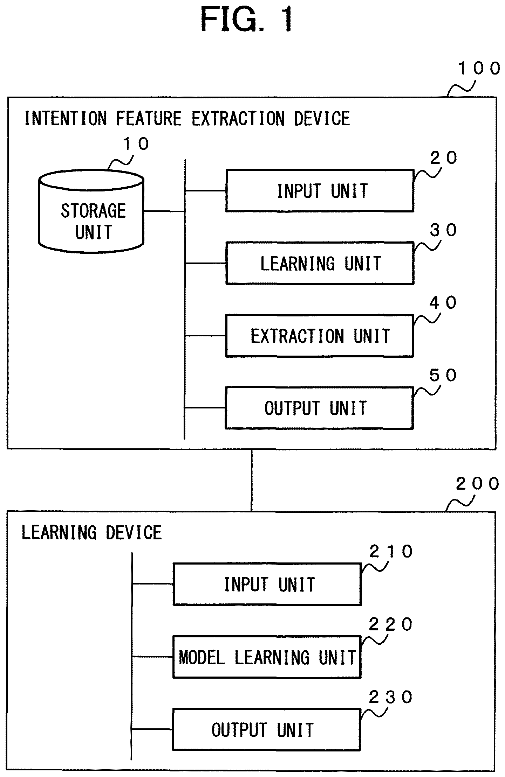

FIG. 1 is a block diagram showing a configuration example of an exemplary embodiment of an intention feature extraction device according to the present invention. The intention feature extraction device 100 of this exemplary embodiment comprises a storage unit 10, an input unit 20, a learning unit 30, an extraction unit 40, and an output unit 50.

The intention feature extraction device 100 is a device that learns an objective function that indicates intention of a subject from the decision-making history of the subject, and extracts the intention of the subject that can be interpreted from the objective function as a feature of the subject. As illustrated in FIG. 1, the intention feature extraction device 100 may be connected to the learning device 200.

The storage unit 10 stores information necessary for the intention feature extraction device 100 to perform various processes. The storage unit 10 may also store various parameters used for processing by the learning unit 30 described below. Further, the storage unit 10 may store the decision-making history of the subject received by the input unit 20 described below. The storage unit 10 is realized by a magnetic disk or the like, for example.

The input unit 20 receives an input of the decision-making history (trajectory) of the subject. For example, when learning for the purpose of automatic driving, the input unit 20 may receive the input of a large amount of driving history data based on the complex intentions of the driver as the decision-making history. Specifically, the decision-making history is represented as time-series data {sₜ, aₜ}ₜ₌₁^{H} of combinations of the state st at time t and the behavior aₜ at time t.

The learning unit 30 learns an objective function in which factors of a behavior intended by the subject are explanatory variables. Specifically, the learning unit 30 learns an objective function represented by a linear regression equation by inverse reinforcement learning that estimates a reward (function) from the behavior of the subject.

In inverse reinforcement learning, learning is usually performed using the decision-making history of an expert, a simulator or actual machine that represents the state of a machine when it is actually operated, and a state transition (prediction) model that represents the predicted transition destination according to the state.

Therefore, the learning unit 30 estimates an objective function based on the decision-making history of the expert, and updates the objective function so that the difference between the decision-making history based on this objective function and the decision-making history of the expert is reduced. Once the objective function is updated, the learning unit 30 performs a decision-making simulation using this objective function. Specifically, in the decision-making simulation, the learning unit 30 performs an optimization calculation to determine a policy using the state transition model and the objective function, and determines the decision-making history by evaluating the behaviors output as a result of the optimization calculation in the simulator. The learning unit 30 then further uses this determined decision-making history for updating the objective function, and by repeating the above process, estimates the objective function of the expert so as to eliminate the difference between the objective function and the decision of the expert.

In many cases, it is difficult to refine the state transition model. Therefore, the learning unit 30 may perform model-free inverse reinforcement learning, in which the objective function can be estimated without using the state transition model. In model-free inverse reinforcement learning, there is no need to know in advance environmental dynamics which is a mathematical model of the control object. Therefore, the effects of errors in modeling can be eliminated. Furthermore, since the decision-making simulation during learning described above is no longer necessary, computational costs can be reduced.

Moreover, in order to learn the objective function for each case, the learning unit 30 may use a learning method that combines the model-free inverse reinforcement learning described above and the hierarchical mixtures of experts learning. Specifically, the learning unit 30 may learn the hierarchical mixtures of experts by relative entropy inverse reinforcement learning using importance sampling based on the random policy.

Relative entropy inverse reinforcement learning is a method of learning a reward function without using a state transition model (i.e., model-free), using sampling from the decision-making history by the random policy. In this learning method, the learning unit 30 divides the decision-making history of the expert into cases, and alternately repeats learning the objective function and a branching rule in each case until the decision-making history of the expert can be accurately reproduced, in order to estimate the branching condition and the objective function in each case.

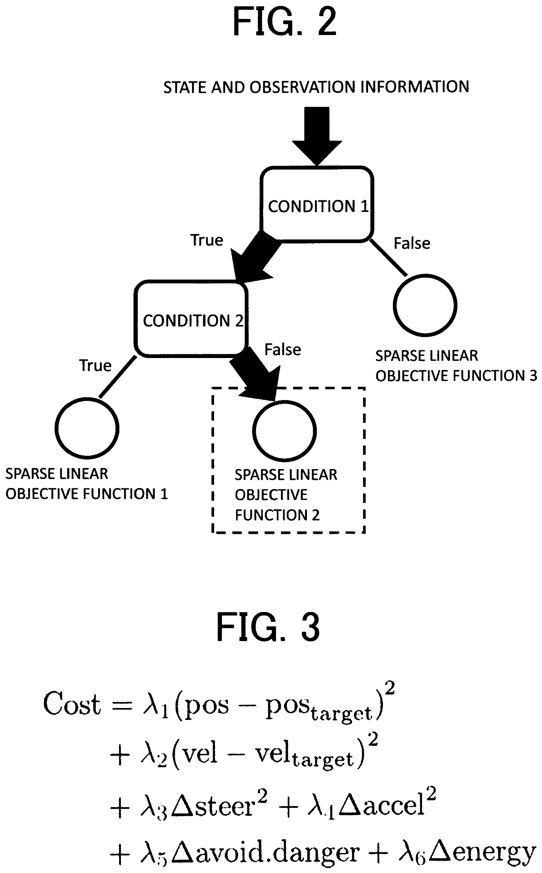

FIG. 2 is an explanatory diagram explaining an overview of the hierarchical mixtures of experts. The hierarchical mixtures of experts illustrated in FIG. 2 is a model that selects one objective function according to the state and observation information. The example shown in FIG. 2 indicates that the input state and observation information satisfy condition 1 and does not satisfy condition 2, and that a sparse linear objective function 2 is selected.

FIG. 3 is an explanatory diagram showing an objective function. The example shown in FIG. 3 illustrates an example of an objective function in model predictive control learned using driving history data of a driver as a decision-making history. In the objective function illustrated in FIG. 3, the weight coefficient of each explanatory variable represents "what and how much importance is placed on" when driving.

For example, in the objective function illustrated in FIG. 3, λ₁ is a coefficient that represents the degree of importance placed on the difference in distance between the current location and the destination. Similarly, λ₂ is a coefficient that expresses the degree of importance placed on the difference between the current speed and the desired speed. In addition, λ₃ is a coefficient that expresses the degree of importance placed on steering angle, λ₄ is a coefficient that expresses the degree of importance placed on acceleration, λ₅ is a coefficient that expresses the degree of importance placed on hazard avoidance, and λ₆ is a coefficient that expresses the degree of importance placed on fuel consumption. The objective function learned in this way can be said to represent the intention of the subject.

In order to learn an interpretable objective function, the learning unit 30 may use heterogeneous mixture learning as the hierarchical mixtures of experts. In heterogeneous mixture learning, the objective function assigned to each leaf node is represented by a linear regression equation, which makes it easier to interpret the degree of influence of explanatory variables on the objective variable.

The range of decision-making histories to be used for learning by the learning unit 30 is arbitrary. For example, the learning unit 30 may divide the decision-making histories according to time, situation, location, etc., and learn the objective function for each of the divided decision history.

The extraction unit 40 extracts weights of the explanatory variables of the learned objective function as the features that represent the intention of the subject. For example, when the decision-making history received by the input unit 20 is a driving history of the subject, the extraction unit 40 may extract the weights of the objective variables as features that represent the driving intention of the subject. For example, when the decision-making history received by the input unit 20 is an ordering history of the subject, the extraction unit 40 may extract the weights of the objective variable as the features indicating the intention of the subject to place an order. Another example is that when the decision-making history received by the input unit 20 is a guidance history of the subject, the extraction unit 40 may extract the weights of the objective variables as the features indicating the intention of the subject to guide.

The output unit 50 outputs the extracted features. At that time, the output unit 50 may output features with associated teacher labels. For example, the output unit 50 may associate information that can be identified from the decision-making history used during learning as the teacher label. For example, when the decision-making history is a driving history, the output unit 50 may associate the occurrence of an accident as a teacher label. For example, when the decision-making history is an ordering history, the output unit 50 may associate sales quantity or profit as a teacher label. For example, when the decision-making history is a guidance history, the output unit 50 may associate the number of retired employees as a teacher label.

The data in which the features are associated with the teacher labels can be used as training data when the learning device 200 described below performs learning. For this reason, the intention feature extraction device 100 that outputs such data can be referred to as a training data generator. The system that includes the intention feature extraction device 100 and the learning device 200 can also be called a model learning system.

The input unit 20, learning unit 30, extraction unit 40, and output unit 50 are realized by a processor (for example, CPU (Central Processing Unit), GPU (Graphics Processing Unit)) of a computer that operates according to a program (an intention feature extraction program).

For example, a program may be stored in the storage unit 10 of the intention feature extraction device 100, and the processor may read the program and operate as the input unit 20, learning unit 30, extraction unit 40, and output unit 50 according to the program. For example, the program may be stored in the storage unit 10 of the intention feature extraction device 100, and the processor may read the program and operate as the input unit 20, learning unit 30, extraction unit 40, and output unit 50 according to the program. In addition, the functions of the intention feature extraction device 100 may be provided in the form of SaaS (Software as a Service).

The input unit 20, the learning unit 30, the extraction unit 40, and the output unit 50 may each be realized by dedicated hardware. Some or all of the components of each device may be realized by general-purpose or dedicated circuit, a processor, or combinations thereof. These may be configured by a single chip or by multiple chips connected through a bus. Some or all of the components of each device may be realized by a combination of the above-mentioned circuit, etc., and a program.

When some or all of the components of the intention feature extraction device 100 are realized by multiple information processing devices, circuits, etc., the multiple information processing devices, circuits, etc. may be centrally located or distributed. For example, the information processing devices, circuits, etc. may be realized as a client-server system, a cloud computing system, etc., each of which is connected through a communication network.

The learning device 200 comprises an input unit 210, a model learning unit 220, and an output unit 230.

The input unit 210 receives an input of training data. For example, the input unit 210 may receive the information generated by the intention feature extraction device 100 as the training data.

The model learning unit 220 learns a prediction model by machine learning using the input training data. The method by which the model learning unit 220 performs the machine learning is arbitrary. The model learning unit 220 can learn a model that is appropriate for the content and use of the input training data.

For example, when the training data is a driving history, the features indicated by the training data can be said to be the driving features of the subject. Therefore, the model learning unit 220 may learn a prediction model in which the occurrence of an accident and the automobile insurance premiums are the objective variables. For example, when the training data is an ordering history, the features indicated by the training data can be said to be the ordering features of the subject. Therefore, the model learning unit 220 may learn a prediction model that uses the profit margin, the number of discards, etc. as the objective variables. In other cases, when the training data is a guidance history, the features indicated by the training data can be said to be the guidance features of the subject. Therefore, the model learning unit 220 may learn a prediction model that uses the number of retirees and the degree of evaluation as objective variables.

The output unit 230 outputs the generated model.

The input unit 210, the model learning unit 220, and the output unit 230 are realized by a processor of a computer that operates according to a program (learning program).

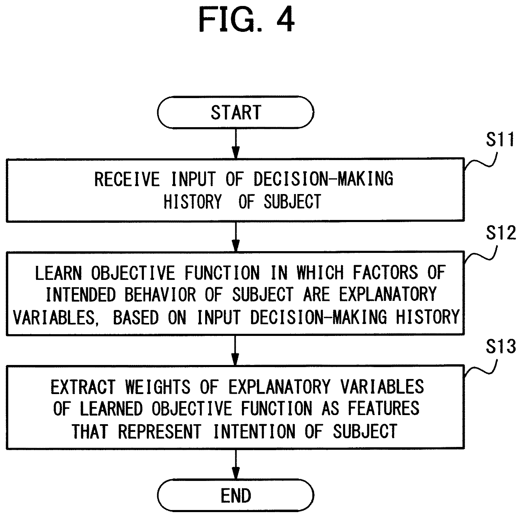

Next, the operation of the intention feature extraction device 100 of this exemplary embodiment will be explained. FIG. 4 is an explanatory diagram showing an operation example of the intention feature extraction device 100 of this exemplary embodiment. The input unit 20 receives an input of the decision-making history of the subject (step S11). The learning unit 30 learns an objective function in which factors of an intended behavior of the subject are explanatory variables, based on the input decision-making history (step S12). Then, the extraction unit 40 extracts the weights of the explanatory variables of the learned objective function as the features that represent the intention of the subject (step S13).

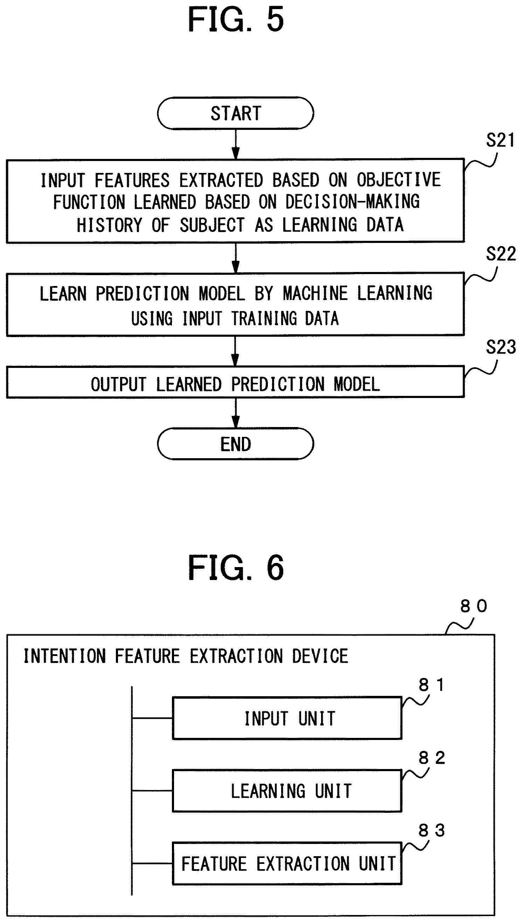

Next, the operation of the learning device 200 of this exemplary embodiment will be explained. FIG. 5 is an explanatory diagram showing an operation example of the learning device 200 of this exemplary embodiment. The input unit 210 inputs features extracted based on the objective function learned based on the decision-making history of the subject as training data (step S21). The model learning unit 220 learns a prediction model by machine learning using the input training data (step S22). The output unit 230 then outputs the learned prediction model (step S23).

As described above, in this exemplary embodiment, the input unit 20 receives the input of the decision-making history of the subject, and the learning unit 30 learns an objective function in which the factors of the behavior intended by the subject are explanatory variables based on the decision-making history. Then, the extraction unit 40 extracts the weights of the explanatory variables of the learned objective function as the features that represent the intention of the subject. Therefore, the intention of the subject can be extracted as an interpretable feature.

In this exemplary embodiment, the input unit 210 inputs the features extracted by the above-mentioned intention feature extraction device 100 as training data, and the model learning unit 220 learns a prediction model by machine learning using the input training data, and the output unit 230 outputs the learned prediction model. This makes it possible to learn a prediction model that takes into account the intention of the subject from decision-making history of the subject.

Next, an overview of the present invention will be explained. FIG. 6 is a block diagram showing a summarized intention feature extraction device according to the present invention. The intention feature extraction device 80 (for example, the intention feature extraction device 100) according to the present invention comprises an input unit 81 (for example, input unit 20) which receives input of the decision-making history of a subject, a learning unit 82 (for example, the learning unit 30) which learns an objective function in which factors of an intended behavior of the subject are explanatory variables, based on the decision-making history, and a feature extraction unit 83 (for example, the extraction unit 40) which extracts weights of the explanatory variables of the learned objective function as features which represent intention of the subject.

By such a configuration, the intention of the subject can be extracted as interpretable features.

The learning unit 82 may also learn the objective function represented by a linear regression equation by inverse reinforcement learning. In this case, each coefficient of the explanatory variable included in each linear regression equation can be extracted as a feature.

The learning unit 82 may also learn the objective function by a learning method that combines model-free inverse reinforcement learning and hierarchical mixtures of experts learning. By such a configuration, the objective function taking each case into account can be learned.

Specifically, the input unit 81 may receive a driving history of the subject as the decision-making history. Then, the feature extraction unit 83 may extract the weights of the learned explanatory variables as features which indicate a driving intention of the subject. By such a configuration, the features which indicate a driving intention of the subject can be extracted as driving features.

The learning unit 82 may also learn the objective function by a learning method that combines model-free inverse reinforcement learning and heterogeneous mixture learning. In this case, it is possible to learn the objective function in each case by a linear regression equation.

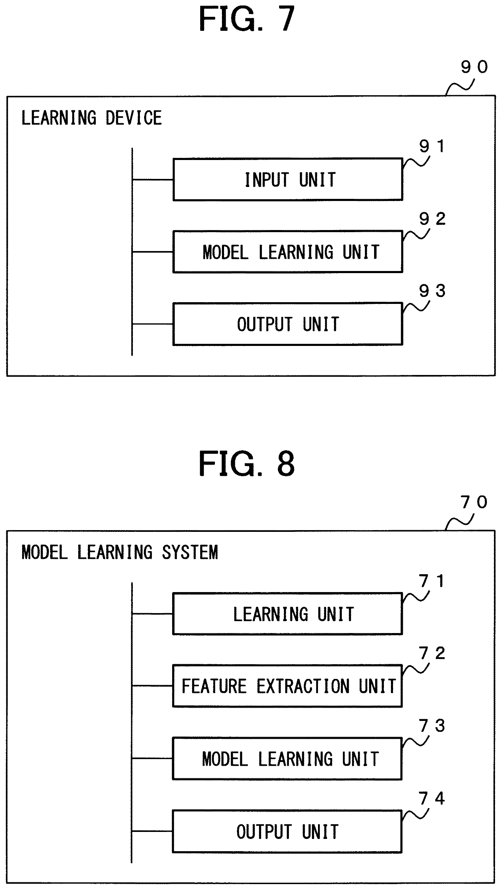

FIG. 7 is a block diagram showing a summarized learning device according to the present invention. The learning device 90 (for example, the learning device 200) according to the present invention comprises an input unit 91 (for example, the input unit 210) that inputs as training data the features extracted based on an objective function that uses the factors of the target's intended behavior as explanatory variables and that has been learned based on the target's decision-making history. The learning device 90 (for example, learning device 200) according to the present invention consists of an input unit 91 (for example, input unit 210) which inputs as training data features extracted based on an objective function, that is learned based on a decision-making history of a subject, in which factors of an intended behavior of the subject are explanatory variables, a learning unit 92 (for example, the model learning unit 220) which learns a prediction model by machine learning using the input training data, and an output unit 93 (for example, the output unit 230) which outputs the learned prediction model.

By such a configuration, a prediction model that takes into account the intention of the subject can be learned from the decision-making history of the subject.

Specifically, the input unit 91 may input training data in which the features extracted based on the objective function learned based on the driving history of the subject are explanatory variables, and the presence or absence of an accident based on the driving history or the automobile insurance premiums are objective variables. Then, the model learning unit 92 may learn a prediction model for predicting automobile insurance premiums by machine learning using the training data.

FIG. 8 is a block diagram showing a summarized model learning system according to the present invention. The model learning system 70 according to the present invention (for example, a combination of the intention feature extraction device 100 and the learning device 200 illustrated in FIG. 1) comprises a learning unit 71 (for example, the learning unit 30) which learns an objective function in which factors of an intended behavior of a subject are explanatory variables, based on a decision-making history, a feature extraction unit 72 (for example, extraction unit 40) which extracts weights of the explanatory variables of the learned objective function as features which represent intention of the subject, a model learning unit 73 (for example, the model learning unit 220) which learns a prediction model by machine learning using the extracted features as training data, and an output unit 74 (for example, output unit 230) which outputs the learned prediction model.

By such a configuration, a prediction model that takes into account the intention of the subject can also be learned from the decision-making history of the subject.

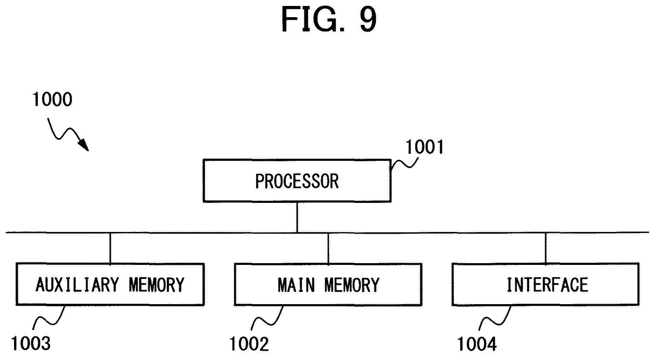

FIG. 9 is a summarized block diagram showing a configuration of a computer for at least one exemplary embodiment. The computer 1000 comprises a processor 1001, a main memory 1002, an auxiliary memory 1003, and an interface 1004.

The intention feature extraction device 80 and the learning device 90 described above are implemented in the computer 1000. The operation of each of the above mentioned processing units is stored in the auxiliary memory 1003 in a form of a program (intention feature extraction program and learning program). The operations of each of the above-mentioned processing units are stored in the auxiliary storage 1003 in the form of programs (intention feature extraction program and learning program). The processor 1001 reads the program from the auxiliary memory 1003, deploys the program to the main memory 1002, and implements the above described processing in accordance with the program.

In at least one exemplary embodiment, the auxiliary memory 1003 is an example of a non-transitory tangible medium. Other examples of non-transitory tangible media include a magnetic disk, an optical magnetic disk, a CD-ROM (Compact Disc Read only memory), a DVD-ROM (Read-only memory), a semiconductor memory, and the like. When the program is transmitted to the computer 1000 through a communication line, the computer 1000 receiving the transmission may deploy the program to the main memory 1002 and perform the above process.

The program may also be one for realizing some of the aforementioned functions. Furthermore, said program may be a so-called differential file (differential program), which realizes the aforementioned functions in combination with other programs already stored in the auxiliary memory 1003.

Apart of or all of the above exemplary embodiments may also be described as, but not limited to, the following supplementary notes.

(Supplementary note 1) An intention feature extraction device comprising:
an input unit which receives input of a decision-making history of a subject,
a learning unit which learns an objective function in which factors of an intended behavior of the subject are explanatory variables, based on the decision-making history, and
a feature extraction unit which extracts weights of the explanatory variables of the learned objective function as features which represent intention of the subject.

(Supplementary note 2) The intention feature extraction device according to Supplementary note 1, wherein
the learning unit learns the objective function represented by a linear regression equation by inverse reinforcement learning.

(Supplementary note 3) The intention feature extraction device according to Supplementary note 1 or 2, wherein
the learning unit learns the objective function by a learning method that combines model-free inverse reinforcement learning and hierarchical mixtures of experts learning.

(Supplementary note 4) The intention feature extraction device according to any one of Supplementary notes 1 to 3, wherein
the input unit receives a driving history of the subject as the decision-making history, and
the feature extraction unit extracts the weights of the learned explanatory variables as features which indicate a driving intention of the subject.

(Supplementary note 5) The intention feature extraction device according to any one of Supplementary notes 1 to 4, wherein
the learning unit learns the objective function by a learning method that combines model-free inverse reinforcement learning and heterogeneous mixture learning.

(Supplementary note 6) A model learning system comprising:
a learning unit which learns an objective function in which factors of an intended behavior of a subject are explanatory variables, based on a decision-making history,
a feature extraction unit which extracts weights of the explanatory variables of the learned objective function as features which represent intention of the subject,
a model learning unit which learns a prediction model by machine learning using the extracted features as training data, and
an output unit which outputs the learned prediction model.

(Supplementary note 7) A learning device comprising:
an input unit which inputs as training data features extracted based on an objective function, that is learned based on a decision-making history of a subject, in which factors of an intended behavior of the subject are explanatory variables,
a model learning unit which learns a prediction model by machine learning using the input training data, and
an output unit which outputs the learned prediction model.

(Supplementary note 8) The learning device according to Supplementary note 7, wherein
the input unit inputs training data in which the features extracted based on the objective function learned based on a driving history of the subject are the explanatory variables and presence or absence of an accident based on the driving history or automobile insurance premiums is the objective variable, and
the model learning unit learns a prediction model to predict the automobile insurance premiums by machine learning using the training data.

(Supplementary note 9) An intention feature extraction method comprising:
receiving input of a decision-making history of a subject,
learning an objective function in which factors of an intended behavior of the subject are explanatory variables, based on the decision-making history, and
extracting weights of the explanatory variables of the learned objective function as features which represent intention of the subject.

(Supplementary note 10) The intention feature extraction method according to Supplementary note 9, wherein
the objective function represented by a linear regression equation is learned by inverse reinforcement learning.

(Supplementary note 11) A learning method comprising:
inputting as training data features extracted based on an objective function, that is learned based on a decision-making history of a subject, in which factors of an intended behavior of the subject are explanatory variables,
learning a prediction model by machine learning using the input training data, and
outputting the learned prediction model.

(Supplementary note 12) The learning method according to Supplementary note 11, further comprising
inputting training data in which the features extracted based on the objective function learned based on a driving history of the subject are the explanatory variables and presence or absence of an accident based on the driving history or automobile insurance premiums is the objective variable, wherein
a prediction model to predict the automobile insurance premiums is learned by machine learning using the training data.

(Supplementary note 13) An intention feature extraction program causing a computer to execute:
an inputting process of receiving input of a decision-making history of a subject,
a learning process of learning an objective function in which factors of an intended behavior of the subject are explanatory variables, based on the decision-making history, and
a feature extracting process of extracting weights of the explanatory variables of the learned objective function as features which represent intention of the subject.

(Supplementary note 14) The intention feature extraction program according to Supplementary note 13 causing the computer to execute
learning the objective function represented by a linear regression equation by inverse reinforcement learning, in the learning process.

(Supplementary note 15) A learning program causing a computer to execute:
an inputting process of inputting as training data features extracted based on an objective function, that is learned based on a decision-making history of a subject, in which factors of an intended behavior of the subject are explanatory variables,
a model learning process of learning a prediction model by machine learning using the input training data, and
an outputting process of outputting the learned prediction model.

(Supplementary note 16) The learning program according to Supplementary note 15 causing the computer to execute
inputting training data in which the features extracted based on the objective function learned based on a driving history of the subject are the explanatory variables and presence or absence of an accident based on the driving history or automobile insurance premiums is the objective variable, in the inputting process, and
learning a prediction model to predict the automobile insurance premiums by machine learning using the training data, in the learning process.

### Reference Signs List

- 10: Storage unit
- 20: Input unit
- 30: Learning unit
- 40: Extraction unit
- 50: Output unit
- 100: Intention feature extraction device
- 200: Learning device
- 210: Input unit
- 220: Model learning unit
- 230: Output unit

## Claims

1. An intention feature extraction device comprising:
an input unit which receives input of a decision-making history of a subject;
a learning unit which learns an objective function in which factors of an intended behavior of the subject are explanatory variables, based on the decision-making history; and
a feature extraction unit which extracts weights of the explanatory variables of the learned objective function as features which represent intention of the subject.

2. The intention feature extraction device according to claim 1, wherein
the learning unit learns the objective function represented by a linear regression equation by inverse reinforcement learning.

3. The intention feature extraction device according to claim 1 or 2, wherein
the learning unit learns the objective function by a learning method that combines model-free inverse reinforcement learning and hierarchical mixtures of experts learning.

4. The intention feature extraction device according to any one of claims 1 to 3, wherein
the input unit receives a driving history of the subject as the decision-making history, and
the feature extraction unit extracts the weights of the learned explanatory variables as features which indicate a driving intention of the subject.

5. The intention feature extraction device according to any one of claims 1 to 4, wherein
the learning unit learns the objective function by a learning method that combines model-free inverse reinforcement learning and heterogeneous mixture learning.

6. A model learning system comprising:
a learning unit which learns an objective function in which factors of an intended behavior of a subject are explanatory variables, based on a decision-making history;
a feature extraction unit which extracts weights of the explanatory variables of the learned objective function as features which represent intention of the subject;
a model learning unit which learns a prediction model by machine learning using the extracted features as training data; and
an output unit which outputs the learned prediction model.

7. A learning device comprising:
an input unit which inputs as training data features extracted based on an objective function, that is learned based on a decision-making history of a subject, in which factors of an intended behavior of the subject are explanatory variables;
a model learning unit which learns a prediction model by machine learning using the input training data; and
an output unit which outputs the learned prediction model.

8. The learning device according to claim 7, wherein
the input unit inputs training data in which the features extracted based on the objective function learned based on a driving history of the subject are the explanatory variables and presence or absence of an accident based on the driving history or automobile insurance premiums is the objective variable, and
the model learning unit learns a prediction model to predict the automobile insurance premiums by machine learning using the training data.

9. An intention feature extraction method comprising:
receiving input of a decision-making history of a subject;
learning an objective function in which factors of an intended behavior of the subject are explanatory variables, based on the decision-making history; and
extracting weights of the explanatory variables of the learned objective function as features which represent intention of the subject.

10. The intention feature extraction method according to claim 9, wherein
the learning unit learns the objective function represented by a linear regression equation by inverse reinforcement learning.

11. A learning method comprising:
inputting as training data features extracted based on an objective function, that is learned based on a decision-making history of a subject, in which factors of an intended behavior of the subject are explanatory variables;
learning a prediction model by machine learning using the input training data; and
outputting the learned prediction model.

12. The learning method according to claim 11, further comprising
inputting training data in which the features extracted based on the objective function learned based on a driving history of the subject are the explanatory variables and presence or absence of an accident based on the driving history or automobile insurance premiums is the objective variable, wherein
a prediction model to predict the automobile insurance premiums is learned by machine learning using the training data.

13. An intention feature extraction program causing a computer to execute:
an inputting process of receiving input of a decision-making history of a subject;
a learning process of learning an objective function in which factors of an intended behavior of the subject are explanatory variables, based on the decision-making history; and
a feature extracting process of extracting weights of the explanatory variables of the learned objective function as features which represent intention of the subject.

14. The intention feature extraction program according to claim 13 causing the computer to execute
learning the objective function represented by a linear regression equation by inverse reinforcement learning, in the learning process.

15. A learning program causing a computer to execute:
an inputting process of inputting as training data features extracted based on an objective function, that is learned based on a decision-making history of a subject, in which factors of an intended behavior of the subject are explanatory variables;
a model learning process of learning a prediction model by machine learning using the input training data; and
an outputting process of outputting the learned prediction model.

16. The learning program according to claim 15 causing the computer to execute:
inputting training data in which the features extracted based on the objective function learned based on a driving history of the subject are the explanatory variables and presence or absence of an accident based on the driving history or automobile insurance premiums is the objective variable, in the inputting process; and
learning a prediction model to predict the automobile insurance premiums by machine learning using the training data, in the learning process.
